# EUROPÄISCHE PATENTSCHRIFT

(11) **EP 3 341 165 B1**
(45) Veröffentlichungstag und Bekanntmachung des Hinweises auf die Patenterteilung: **17.07.2019**
(21) Anmeldenummer: 16753916.2
(22) Anmeldetag: 18.08.2016
(51) Int. Cl.: B25J 15/00, B25J 15/08

(54) **ROBOTERGREIFER**
ROBOT GRIPPER
PRÉHENSEUR DE ROBOT

(30) Priorität: 28.08.2015 DE 102015216552
(43) Veröffentlichungstag der Anmeldung: 04.07.2018
(73) Patentinhaber: KUKA Deutschland GmbH, 86165 Augsburg (DE)
(72) Erfinder: BRUDNIOK, Sven, 86853 Langerringen (DE)
(74) Vertreter: Ege Lee & Partner Patentanwälte PartGmbB
(86) Internationale Anmeldenummer: PCT/EP2016/069661
(87) Internationale Veröffentlichungsnummer: WO 2017/036813

(56) Entgegenhaltungen:
- EP-B1- 2 660 015
- DE-A1-102013 226 289
- JP-A- 2003 266 357

## Beschreibung

Die Erfindung betrifft einen Robotergreifer, aufweisend einen Greifergrundkörper, ein Basisglied, welches mittels eines ersten Drehgelenks um eine erste Drehachse drehbar bezüglich des Greifergrundkörpers gelagert ist, und ein Zwischenglied, welches mittels eines zweiten Drehgelenks bezüglich des Basisglieds drehbar gelagert ist und zwar um eine zweite Drehachse, die parallel zur ersten Drehachse ausgerichtet und in einem konstanten ersten Abstand von der ersten Drehachse angeordnet ist, des Weiteren aufweisend einen Fingerträger, der einen ersten Greiferfinger trägt und der mittels eines dritten Drehgelenks bezüglich des Zwischenglieds drehbar gelagert ist und zwar um eine dritte Drehachse, die parallel sowohl zur ersten Drehachse als auch zur zweiten Drehachse ausgerichtet und in einem konstanten zweiten Abstand von der zweiten Drehachse angeordnet ist.

Aus der WO 2008/083995 A1 ist eine Vorrichtung zur Qualitätskontrolle eines rotationssymmetrischen Körpers bekannt, wobei die Vorrichtung ein Handhabungssystem mit einem Greifer zum Greifen des Körpers und zum Transportieren des Körpers in eine Arbeitsposition, sowie mindestens eine elektronische Kamera zum optischen Abtasten des Körpers in der Arbeitsposition aufweist, wobei der Greifer des Handhabungssystems Greiffinger mit rotationssymmetrischen Halteelementen zum Festhalten des Körpers aufweist, wobei die Halteelemente um ihre Rotationsachsen rotierbar ausgebildet sind. Die Halteelemente der Greiffinger des Greifers sind dabei jeweils mit einem Zahnrad drehfest verbunden, wobei die Zahnräder aller Greiffinger des Greifers mittelbar über mindestens ein weiteres Zahnrad mit einem zentralen Zahnrad des Greifers in Eingriff stehen, und der Greifer einen Antriebsmechanismus aufweist, welcher das zentrale Zahnrad in eine Rotationsbewegung versetzt.

Aus der EP 2 660 015 B1 ist ein Greifer zum Manipulieren von, insbesondere röhrchenförmigen, Probengefäßen bekannt, mit einer Greiferbasis, wenigstens zwei je einen Halteabschnitt zum Erfassen eines Probengefäßes aufweisenden, jeweils um eine Fingerrotationsachse relativ zu der Greiferbasis verdrehbar an der Greiferbasis angeordneten Greiferfingern, wobei die Halteabschnitte der Greiferfinger jeweils in Bezug auf die zugeordnete Fingerrotationsachse azentrisch angeordnet sind, und mit einem ersten Antrieb zum Verdrehen der Greiferfinger, wobei die Greiferfinger derart miteinander gekoppelt sind, dass sie von dem Antrieb gleichzeitig und mit jeweils gleicher Rotationsgeschwindigkeit und -richtung angetrieben werden, wobei die Greiferbasis an einem Grundkörper und relativ zu diesem um eine von den Fingerrotationsachsen verschiedene Basisrotationsachse drehbar angeordnet ist, dass ein zweiter Antrieb zum Verdrehen der Greiferbasis relativ zu dem Grundkörper vorgesehen ist und dass eine Steuereinrichtung vorgesehen ist zum Steuern der Antriebe derart, dass durch eine Bewegungskombination aus Verdrehen der Greiferfinger relativ zu der Greiferbasis und Verdrehen der Greiferbasis relativ zu dem Grundkörper für jeden der Halteabschnitte der Greiferfinger jeweils eine im Wesentlichen lineare Bewegung relativ zu dem Grundkörper resultiert.

Die JP 2003 266357 A beschreibt ein robotisches Handteil, das gebildet wird, indem fünf gelenkig gekrümmte Mechanismen, die den Daumen, den Zeigefinger, den Mittelfinger, den dritten Finger bzw. den kleinen Finger bilden, durch ein Pufferteil an einem Stützrahmen befestigt werden, der den Handrücken wie eine Tellerfeder bildet. Wenn eine äußere Kraft wie Biegen, Drehen und Stoßbelastung auf einen Finger ausgeübt wird, wird die Blattfeder verformt, um die externe Kraft zu absorbieren.

Die DE 10 2013 226 289 A1 beschreibt eine Röntgenvorrichtung, für einen medizinischen Arbeitsplatz, aufweisend einen insbesondere C-bogenförmigen Träger, der einen ersten Trägerhalteabschnitt aufweist, an dem eine Röntgensendeeinrichtung gehalten ist, und der einen dem ersten Trägerhalteabschnitt gegenüberliegenden zweiten Trägerhalteabschnitt aufweist, an dem eine Röntgenempfangseinrichtung gehalten ist, des Weiteren aufweisend eine Verstelleinrichtung, die ausgebildet ist, eine relative Pose von Röntgensendeeinrichtung und/oder Röntgenempfangseinrichtung zu dem C-bogenförmigen Träger durch Verstellen der Pose der Röntgensendeeinrichtung an dem ersten Trägerhalteabschnitt und/oder durch Verstellen der Pose der Röntgenempfangseinrichtung an dem zweiten Trägerhalteabschnitt unabhängig voneinander zu ändern.

Aufgabe der Erfindung ist es, einen Robotergreifer zu schaffen, der einen besonders robusten mechanischen Aufbau aufweist.

Diese Aufgabe wird erfindungsgemäß gelöst durch einen Robotergreifer, aufweisend einen Greifergrundkörper, ein Basisglied, welches mittels eines ersten Drehgelenks um eine erste Drehachse drehbar bezüglich des Greifergrundkörpers gelagert ist, und ein Zwischenglied, welches mittels eines zweiten Drehgelenks bezüglich des Basisglieds drehbar gelagert ist und zwar um eine zweite Drehachse, die parallel zur ersten Drehachse ausgerichtet und in einem konstanten ersten Abstand von der ersten Drehachse angeordnet ist, des Weiteren aufweisend einen Fingerträger, der einen ersten Greiferfinger trägt und der mittels eines dritten Drehgelenks bezüglich des Zwischenglieds drehbar gelagert ist und zwar um eine dritte Drehachse, die parallel sowohl zur ersten Drehachse als auch zur zweiten Drehachse ausgerichtet und in einem konstanten zweiten Abstand von der zweiten Drehachse angeordnet ist, welcher zweite Abstand dieselbe Länge aufweist, wie der erste Abstand, wobei das erste Drehgelenk durch eine erste Kopplungsvorrichtung mit dem zweiten Drehgelenk in einem festgelegten ersten Übersetzungsverhältnis von 1 zu minus 2 gekoppelt ist und das zweite Drehgelenk durch eine zweite Kopplungsvorrichtung mit dem dritten Drehgelenk in einem festgelegten zweiten Übersetzungsverhältnis von 2 zu minus 1 gekoppelt ist und der Robotergreifer einen den ersten Greiferfinger bewegenden Antriebsmotor aufweist, der ausgebildet ist, den ersten Greiferfinger durch gleichzeitiges Verstellen des ersten Drehgelenks, des zweiten Drehgelenks und des dritten Drehgelenks zu bewegen, wobei das erste Drehgelenk, das zweite Drehgelenk und das dritte Drehgelenk zusammen mit der ersten Kopplungsvorrichtung und der zweiten Kopplungsvorrichtung einen Antriebsstrang bilden, der ausgebildet ist, angetrieben von dem Antriebsmotor, den ersten Greiferfinger auf einer geraden Bahn zu bewegen, ohne dass sich die Orientierung des ersten Greiferfingers dabei ändert.

Roboterarme mit zugehörigen Robotersteuerungen, insbesondere Industrieroboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren über Gelenke verbundene Glieder und programmierbare Robotersteuerungen (Steuervorrichtungen) auf, die während des Betriebs die Bewegungsabläufe des Roboterarms automatisch steuern bzw. regeln, um einen Roboterflansch des Roboterarms im Raum zu positionieren und zu bewegen. Die Glieder werden dazu über Antriebsmotoren, insbesondere elektrische Antriebsmotoren, die von der Robotersteuerung angesteuert werden, insbesondere bezüglich der Bewegungsachsen des Industrieroboters, welche die Bewegungsfreiheitsgrade der Gelenke repräsentieren, bewegt.

Der Roboter kann beispielsweise ein Industrieroboter sein, der insbesondere ein Knickarmroboter mit seriell aufeinander folgenden Drehachsen, beispielsweise sechs Drehachsen sein kann. Alternativ kann der Roboter ein SCARA-Roboter, d.h. ein horizontaler Gelenkarmroboter sein, welcher in der Regel vier Freiheitsgrade bzw. Achsen, d.h. Gelenke aufweist, von denen drei Gelenke Drehgelenke sein können und ein Gelenk ein Schubgelenk ist. Der Roboter kann aber auch ein sogenannter Leichtbauroboter sein, welcher insbesondere sieben seriell aufeinander folgende Drehachsen aufweisen kann.

Leichtbauroboter unterscheiden sich zunächst von üblichen Industrierobotern dadurch, dass sie eine für die Mensch-Maschine-Kooperation günstige Baugröße aufweisen und dabei eine zu ihrem Eigengewicht relativ hohe Tragfähigkeit aufweisen. Daneben können Leichtbauroboter insbesondere auch kraft- und/oder momentgeregelt statt lediglich positionsgeregelt betrieben werden, was beispielsweise eine Mensch-Roboter-Kooperation sicherer macht. Außerdem kann dadurch eine solche sichere Mensch-Maschine-Kooperation erreicht werden, dass beispielsweise unbeabsichtigte Kollisionen des Roboterarmes mit Personen, wie beispielsweise Werker und Monteure entweder verhindert oder zumindest derart abgeschwächt werden können, so dass den Personen bzw. Monteuren kein Schaden entsteht.

Ein solcher Roboterarm bzw. ein solcher Leichtbauroboter weist vorzugsweise mehr als sechs Freiheitsgrade auf, so dass insoweit ein überbestimmtes System geschaffen wird, wodurch derselbe Punkt im Raum in gleicher Orientierung in mehreren, insbesondere sogar unendlich vielen verschiedenen Posen des Roboterarms erreicht werden kann. Der Leichtbauroboter kann auf externe Krafteinwirkungen in geeigneten Weisen reagieren.

Zur Kraftmessung können jeweils an den Gelenken angeordnete Drehmomentsensoren verwendet werden, die in mehreren Raumrichtungen Drehmomente und Kräfte erfassen bzw. messen können. Alternativ oder ergänzend können die externen Kräfte auch sensorlos, beispielsweise anhand der gemessenen Motorströme der Antriebe an den Gelenken des Leichtbauroboters abgeschätzt werden. Als Regelungskonzepte kann beispielsweise eine indirekte Kraftregelung durch Modellierung des Leichtbauroboters als mechanischer Widerstand (Impedanz) oder eine direkte Kraftregelung verwendet werden.

In gleicher Weise kann auch ein SCARA-Roboter über jeweils an den Gelenken angeordnete Drehmomentsensoren verfügen, die in mehreren Raumrichtungen Drehmomente und Kräfte erfassen bzw. messen können. Alternativ oder ergänzend können auch bei einem SCARA-Roboter die externen Kräfte sensorlos, beispielsweise anhand der gemessenen Motorströme der Antriebsmotoren an den Gelenken des SCARA-Roboters abgeschätzt werden.

Indem der gattungsgemäße Robotergreifer einen Fingerträger aufweist, der einen ersten Greiferfinger trägt und der mittels eines dritten Drehgelenks bezüglich des Zwischenglieds drehbar gelagert ist und zwar um eine dritte Drehachse, die parallel sowohl zur ersten Drehachse als auch zur zweiten Drehachse ausgerichtet und in einem konstanten zweiten Abstand von der zweiten Drehachse angeordnet ist, welcher zweite Abstand dieselbe Länge aufweist, wie der erste Abstand, wobei das erste Drehgelenk durch eine erste Kopplungsvorrichtung mit dem zweiten Drehgelenk in einem festgelegten ersten Übersetzungsverhältnis von 1 zu minus 2 gekoppelt ist und das zweite Drehgelenk durch eine zweite Kopplungsvorrichtung mit dem dritten Drehgelenk in einem festgelegten zweiten Übersetzungsverhältnis von 2 zu minus 1 gekoppelt ist und der Robotergreifer einen den ersten Greiferfinger bewegenden Antriebsmotor aufweist, der ausgebildet ist, den ersten Greiferfinger durch gleichzeitiges Verstellen des ersten Drehgelenks, des zweiten Drehgelenks und des dritten Drehgelenks zu bewegen, wird ein mechanisch besonders robuster Robotergreifer geschaffen, mit dem eine einfache Auf-/Zu-Bewegung in einer kinematischen Ausführung eines einzigen Freiheitsgrades des Robotergreifers realisiert werden kann. Insbesondere in Verbindung mit wenigstens einem bezüglich des Greifergrundkörpers feststehenden zweiten Greiferfinger kann eine mechanisch einfach aufgebaute Greiferzange mit zwei Greiferbacken gebildet werden, wobei lediglich mittels eines einzigen Freiheitsgrades, d.h. mittels eines einzigen Antriebsmotors die beiden gegenüberliegenden Greiferbacken aufeinander zu bzw. voneinander weg bewegt werden können.

Das erste Drehgelenk, das zweite Drehgelenk und das dritte Drehgelenk sind demgemäß in einer festen konstruktiven Konfiguration miteinander gekoppelt. Insoweit weist der Robotergreifer nur einen einzigen Freiheitsgrad auf. Der Robotergreifer kann deshalb mit nur einem einzigen Antriebsmotor geöffnet bzw. geschlossen werden. Ein Öffnen des Robotergreifers erfolgt durch ein Wegbewegen des ersten (beweglichen) Greiferfingers von dem zweiten (feststehenden) Greiferfinger. Ein Schließen des Robotergreifers erfolgt durch ein Zubewegen des ersten (beweglichen) Greiferfingers auf den zweiten (feststehenden) Greiferfinger zu. Der erste Greiferfinger wird von dem einzigen Antriebsmotor des Robotergreifers bewegt. Durch die erfindungsgemäße Kopplung von erstem Drehgelenk, zweitem Drehgelenk und drittem Drehgelenk kann eine robustere und steifere Mechanik geschaffen werden, als dies beispielsweise mit einer Linearführung möglich wäre. Das erste Drehgelenk, das zweite Drehgelenk und das dritte Drehgelenk können in einer dem Fachmann als solches bekannten Weise mittels Wälzlagern sehr steif gelagert werden. Insgesamt können folglich sehr hohe Schließkräfte am Robotergreifer realisiert werden.

Das erste Drehgelenk, das zweite Drehgelenk und das dritte Drehgelenk sind derart miteinander gekoppelt, dass der Fingerträger bzw. der erste Greiferfinger eine lineare Bewegung bezüglich des zweiten (feststehenden) Greiferfingers ausführt. Die Kopplung erfolgt durch eine konstruktive Festlegung des Abstands der zweiten Drehachse des zweiten Drehgelenks von der ersten Drehachse des ersten Drehgelenks, durch eine konstruktive Festlegung des Abstands der dritten Drehachse des dritten Drehgelenks von der zweiten Drehachse des zweiten Drehgelenks und den beiden Übersetzungsverhältnissen von erstem Drehgelenk zu zweitem Drehgelenk und von zweitem Drehgelenk zu drittem Drehgelenk.

Der erste Abstand von erster Drehachse zu zweiter Drehachse weist dieselbe Länge auf, wie der zweite Abstand von zweiter Drehachse zu dritter Drehachse. Außerdem ist das erste Drehgelenk durch eine erste Kopplungsvorrichtung mit dem zweiten Drehgelenk in einem festgelegten ersten Übersetzungsverhältnis von 1 zu minus 2 gekoppelt und das zweite Drehgelenk durch eine zweite Kopplungsvorrichtung mit dem dritten Drehgelenk in einem festgelegten zweiten Übersetzungsverhältnis von 2 zu minus 1 gekoppelt. Dies hat zur Folge, dass der erste Greiferfinger sich bezüglich des zweiten Greiferfingers auf einer geraden Bahn bewegt, ohne dass sich die Orientierung des ersten Greiferfingers bezüglich des zweiten Greiferfingers ändert.

Sowohl die erste Kopplungsvorrichtung, als auch die zweite Kopplungsvorrichtung kann konstruktiv als ein Getriebe, insbesondere ein Zahnriementrieb, ein Kettentrieb, oder als ein Zahnradgetriebe ausgebildet sein. In den Ausführungsvarianten als Zahnradgetriebe kann das Zahnradgetriebe beispielsweise Stirnräder oder Kegelräder umfassen.

Sowohl der erste (bewegliche) Greiferfinger, als auch der zweite (feststehende) Greiferfinger können vorzugsweise von starren Stäben gebildet werden. Indem der Greiferfinger bzw. die Greiferfinger als starre Stäbe ausgebildet sind, können aufwändige Gelenke an den Greiferfingern entfallen und demgemäß kostengünstige und auch robuste Greiferfinger geschaffen werden, die zudem nur wenig anfällig für Störungen sind. Diese starren Stäbe können jedoch vielfältige Querschnittsformen aufweisen. Jeder der Greiferfinger kann auch mittels einer den jeweiligen Greiferfinger mit dem Robotergreifer bzw. dessen Greifergrundkörper oder Fingerträger verbindenden Kupplungsvorrichtung austauschbar am Robotergreifer befestigt sein. So können die Stäbe eine allgemeine zylindrische Außenmantelwand aufweisen und die Stäbe in einem senkrecht zu ihrer Längserstreckung verlaufenden Querschnitt beispielsweise eine kreisförmige, quadratische, rechteckige, dreieckige oder sonstige geometrische Form aufweisen. Insbesondere kann die zylindrische Außenmantelwand dieser Stäbe ein gerader Zylinder sein. Alle am Robotergreifer vorhandenen Greiferfinger können dieselbe Querschnittsform aufweisen. Alternativ kann wenigstens ein Greiferfinger eine andere Querschnittsform aufweisen, als der wenigstens eine andere Greiferfinger. Die am Robotergreifer vorhandenen Greiferfinger können aber auch individuelle, d.h. voneinander abweichende Querschnittsformen aufweisen.

In einer ersten grundlegenden Variante des Robotergreifers kann der erste Greiferfinger über das erste Drehgelenk, das zweite Drehgelenk und das dritte Drehgelenk bezüglich des Greifergrundkörpers verstellbar gelagert sein. Der zweite (feststehende) Greiferfinger ist lediglich an dem Greifergrundkörper starr befestigt. In einer anderen Variante können zwei starre Greiferfinger vorhanden sein, die beide in einem Abstand voneinander an dem Greifergrundkörpers befestigt sind. Ein solcher Robotergreifer weist demgemäß also insgesamt drei Greiferfinger auf, wobei der erste Greiferfinger relativ zu den beiden anderen am Greifergrundkörper starr befestigten Greiferfingern über das erste Drehgelenk, das zweite Drehgelenk und das dritte Drehgelenk verstellbar ist.

Der Greifergrundkörper kann eine im Wesentlichen rotationssymmetrische Grundform aufweisen. Die rotationssymmetrische Grundform kann in allen Ausführungsvarianten beispielsweise die Form eines im Wesentlichen geraden Kreiszylinders sein. Der Greifergrundkörper kann beispielsweise im Wesentlichen kreisscheibenförmig gestaltet sein. Die rotationssymmetrische Grundform kann aber beispielsweise auch kegelstumpfförmig oder tonnenförmig sein. An einer kreisförmigen ersten Stirnseite des Greifergrundkörpers kann der Anschlussflansch angeordnet sein. An einer der ersten kreisförmigen Stirnseite gegenüber liegenden, kreisförmigen Stirnseite kann sich der erste Greiferfinger senkrecht aus der Ebene der zweiten Stirnseite heraus erstrecken. Auch der wenigstens eine zweite Greiferfinger, d.h. der oder die starren Greiferfinger können sich senkrecht aus der Ebene der zweiten Stirnseite heraus erstrecken. Die Greiferfinger des Robotergreifers können sich demgemäß in einer parallelen Anordnung zueinander ausgerichtet von der zweiten Stirnseite weg erstrecken. Die Längserstreckungen der Greiferfinger können sich insbesondere parallel zur Symmetrieachse des Anschlussflansches, d.h. auch parallel zu einer Drehachse eines Werkzeugflansches eines Roboterarms, an dem der Robotergreifer anschließbar ist, erstrecken.

Das erste Drehgelenk, das zweite Drehgelenk und das dritte Drehgelenk bilden erfindungsgemäß zusammen mit der ersten Kopplungsvorrichtung und der zweiten Kopplungsvorrichtung einen Antriebsstrang, der ausgebildet ist, angetrieben von dem Antriebsmotor, den ersten Greiferfinger auf einer geraden Bahn
zu bewegen, ohne dass sich die Orientierung des ersten Greiferfingers dabei ändert.

Damit sich der erste Greiferfinger trotz alleiniger Verwendung von Drehgelenken auf einer geraden Bahn bewegt, muss der erste Abstand von erster Drehachse zu zweiter Drehachse dieselbe Länge aufweisen, wie der zweite Abstand von zweiter Drehachse zu dritter Drehachse. Dies bedeutet, dass der erste Abstand genauso groß sein muss, wie der zweite Abstand. Außerdem muss sich das erste Drehgelenk durch eine erste Kopplungsvorrichtung gegenüber dem zweiten Drehgelenk in einem festgelegten ersten Übersetzungsverhältnis von 1 zu minus 2 drehen und das zweite Drehgelenk durch eine zweite Kopplungsvorrichtung gegenüber dem dritten Drehgelenk in einem festgelegten zweiten Übersetzungsverhältnis von 2 zu minus 1 drehen. Nur dies hat zur Folge, dass der erste Greiferfinger sich bezüglich des zweiten Greiferfingers auf einer geraden Bahn bewegt, ohne dass sich dabei die Orientierung des ersten Greiferfingers bezüglich des zweiten Greiferfingers ändert.

Der Robotergreifer kann wenigstens einen bezüglich des Greifergrundkörpers feststehenden zweiten Greiferfinger aufweisen. Dies bedeutet, dass in dieser Ausführungsform der Robotergreifer eine Greiferzange bildet, welche zwei Greiferbacken aufweist, die geöffnet und geschlossen werden können, von denen die eine Greiferbacke von dem ersten Greiferfinger gebildet wird und die andere Greiferbacke von dem zweiten Greiferfinger gebildet wird. Ist in dieser Ausführungsform der zweite Greiferfinger bezüglich des Greifergrundkörpers feststehend ausgeführt, dann wird ein Öffnen und Schließen der Greiferzange dadurch bewirkt, dass der erste (bewegliche) Greiferfinger auf den zweiten (feststehenden) Greiferfinger zu bewegt wird bzw. von dem zweiten (feststehenden) Greiferfinger weg bewegt wird. Der erste Greiferfinger wird mittels des einzigen Antriebsmotors des Robotergreifers bewegt.

Das erste Drehgelenk, das zweite Drehgelenk und das dritte Drehgelenk können zusammen mit der ersten Kopplungsvorrichtung und der zweiten Kopplungsvorrichtung demgemäß einen Antriebsstrang bilden, der ausgebildet ist, den ersten Greiferfinger in einer ersten Antriebsrichtung des Antriebsmotors auf einer geraden Bahn auf den feststehenden zweiten Greiferfinger zu zubewegen und in einer entgegengesetzten, zweiten Antriebsrichtung des Antriebsmotors auf einer geraden Bahn von dem feststehenden zweiten Greiferfinger weg zu bewegen, ohne dass sich die Orientierung des ersten Greiferfingers dabei ändert. Die gerade Bahn, entlang welcher der erste Greiferfinger sich bewegen kann, kann auf einer Geraden liegen, welche den zweiten (feststehenden) Greiferfinger schneidet, insbesondere durch die Zentrumsachse des Basisglieds läuft. Die Drehachse des beweglichen Greiferfingers schneidet auf jeder Bahn immer die erste Drehachse. Dies bedeutet, dass der erste Greiferfinger auf den zweiten Greiferfinger zubewegt werden kann, maximal bis der erste Greiferfinger bündig an der Oberfläche des zweiten Greiferfingers ansteht. Dann ist die Greiferzange geschlossen.

Das erste Drehgelenk, das zweite Drehgelenk und das dritte Drehgelenk können zusammen mit der ersten Kopplungsvorrichtung und der zweiten Kopplungsvorrichtung in einer abgewandelten Ausführungsform einen Antriebsstrang bilden, der ausgebildet ist, den ersten Greiferfinger in einer ersten Antriebsrichtung des Antriebsmotors auf einer tangentialen Bahn an den feststehenden zweiten Greiferfinger anzunähern und in einer entgegengesetzten zweiten Antriebsrichtung des Antriebsmotors auf einer tangentialen Bahn von dem feststehenden zweiten Greiferfinger weg zu bewegen, ohne dass sich die Orientierung des ersten Greiferfingers dabei ändert. In dieser abgewandelten Ausführungsform läuft die gerade Bahn, entlang welcher der erste Greiferfinger sich bewegen kann, schräg an dem zweiten (feststehenden) Greiferfinger vorbei, so dass es sein kann, dass der erste Greiferfinger den zweiten (feststehenden) Greiferfinger gar nicht schneidet, sondern sich der erste Greiferfinger dem zweiten (feststehenden) Greiferfinger zunächst nur annähert, um in einem gewissen Minimalabstand an dem zweiten (feststehenden) Greiferfinger sich vorbeizubewegen. Dies bedeutet, dass der erste Greiferfinger auf den zweiten Greiferfinger zubewegt werden kann, maximal bis der erste Greiferfinger sich in einem Minimalabstand von der Oberfläche des zweiten Greiferfingers befindet. Eine solche Greiferzange kann demgemäß nicht bündig geschlossen werden, was jedoch für gewisse Greifanforderungen ausreichend oder sogar gefordert sein kann.

Generell lassen sich aber auch andere Arten von Bahnen erzeugen, auf denen sich der erste Greiferfinger zu bewegen vermag. Derartige andere Bahnformen können durch die Auswahl von spezifischen Abständen zwischen den jeweils zwei Drehachsen und durch die Auswahl von spezifischen Übersetzungsverhältnissen vom ersten Drehgelenk zum zweiten Drehgelenk und vom zweiten Drehgelenk zum dritten Drehgelenk erzeugt werden. Die anderen Bahnformen sind dabei jedoch stets durch die jeweilige konstruktive Ausführungsform des Robotergreifers bestimmt d.h. festgelegt und können nicht durch automatisierte und/oder programmierte unterschiedliche Ansteuerung des Robotergreifers erzeugt werden, da der Robotergreifer nur über einen einzigen kinematischen Freiheitsgrad verfügt und insoweit die kinematische Konfiguration der drei Drehgelenke zueinander mechanisch konstruktiv festgelegt ist.

Der Greifergrundkörper kann in sämtlichen Ausführungsvarianten einen Anschlussflansch aufweisen, der zur Befestigung des Robotergreifers an einem Werkzeugflansch eines Roboterarms ausgebildet ist. Auch wenn der Robotergreifer von anderen automatisierten Vorrichtung positioniert werden kann, so ist vorzugsweise jedoch vorgesehen, dass der Robotergreifers von einem Roboterarm im Raum bewegt wird, wobei der Roboterarm von einer Robotersteuerung automatisiert, d.h. insbesondere programmgesteuert bewegt werden kann.

Der Robotergreifer kann einen einzigen Antriebsmotor aufweisen, der ausgebildet ist, den ersten Greiferfinger relativ zum Greifergrundkörper auf einer geraden Bahn zu verstellen, ohne dass sich die Orientierung des ersten Greiferfingers dabei ändert.

Das erste Drehgelenk, das zweite Drehgelenk und das dritte Drehgelenk können demgemäß zusammen mit der ersten Kopplungsvorrichtung und der zweiten Kopplungsvorrichtung einen Antriebsstrang bilden, der ausgebildet ist, den ersten Greiferfinger in einer ersten Antriebsrichtung eines einzigen Antriebsmotors des Robotergreifers auf einer geraden Bahn auf den feststehenden zweiten Greiferfinger zu zubewegen und in einer entgegengesetzten, zweiten Antriebsrichtung des Antriebsmotors auf einer geraden Bahn von dem feststehenden zweiten Greiferfinger weg zu bewegen, ohne dass sich die Orientierung des ersten Greiferfingers dabei ändert. So wird ein Robotergreifer geschaffen, der nur einen einzigen kinematischen Freiheitsgrad aufweist.

Der einzige Antriebsmotor kann prinzipiell an jeder beliebigen Gelenkstelle des Antriebsstrangs sein Drehmoment in den Antriebsstrangs einbringen. In konkreten Ausgestaltungen kann der einzige Antriebsmotor insbesondere ausgebildet sein, das Drehmoment in das erste Drehgelenk, in das zweite Drehgelenk oder in das dritte Drehgelenk einzubringen. Zweckmäßigerweise kann vorgesehen sein, dass der Antriebsmotor insbesondere im Greifergrundkörper angeordnet ist und die Antriebswelle des Antriebsmotors an das Basisglied angekoppelt ist, d.h. der Antriebsmotor sein Drehmoment in das erste Drehgelenk einleitet.

Das Basisglied kann eine rotationssymmetrische Außenmantelwand aufweisen, an der das Basisglied vollständig innerhalb der Außenkontur des Greifergrundkörpers drehbar gelagert ist, das Zwischenglied des Robotergreifers eine rotationssymmetrische Außenmantelwand aufweisen, an der das Zwischenglied vollständig innerhalb der Außenkontur des Basisglieds drehbar gelagert ist, und/oder der Fingerträger des Robotergreifers eine rotationssymmetrische Außenmantelwand aufweisen, an der der Fingerträger vollständig innerhalb der Außenkontur des Zwischenglieds drehbar gelagert ist. Dies kann insbesondere bedeuten, dass nur die Lagerung jeweils innen liegt. Es kann jedoch auch sein, dass sich Segmente des Antriebsstrangs über mehrere Glieder erstrecken.

Dies bedeutet, dass das Basisglied eine rotationssymmetrische Außenmantelwand aufweisen kann, an der das Basisglied vollständig innerhalb der Außenkontur des Greifergrundkörpers drehbar gelagert ist. Alternativ oder ergänzend dazu kann ein Zwischenglied des Robotergreifers eine rotationssymmetrische Außenmantelwand aufweisen, an der das Zwischenglied vollständig innerhalb der Außenkontur des Basisglieds drehbar gelagert ist. Des Weiteren alternativ oder ergänzend dazu kann ein Fingerträger des Robotergreifers eine rotationssymmetrische Außenmantelwand aufweisen, an der der Fingerträger vollständig innerhalb der Außenkontur des Zwischenglieds drehbar gelagert ist.

Das Basisglied kann eine in Richtung der ersten Drehachse weisende Bauhöhe aufweisen, die höchstens so groß ist, wie die in Richtung der ersten Drehachse weisenden Bauhöhe des Greifergrundkörpers, das Zwischenglied des Robotergreifers kann eine in Richtung der zweiten Drehachse weisende Bauhöhe aufweisen, die höchstens so groß ist, wie die in Richtung der ersten Drehachse weisenden Bauhöhe des Basisglieds, und der Fingerträger des Robotergreifers kann eine in Richtung der dritten Drehachse weisende Bauhöhe aufweisen, die höchstens so groß, wie die in Richtung der zweiten Drehachse weisenden Bauhöhe des Zwischenglieds. Dadurch ergibt sich eine geringe Gesamtbauhöhe des Robotergreifers.

Dies bedeutet, dass das Basisglied eine in Richtung der ersten Drehachse weisende Bauhöhe aufweisen kann, die höchstens so groß ist, wie die in Richtung der ersten Drehachse weisende Bauhöhe des Greifergrundkörpers. Alternativ oder ergänzend dazu kann das Zwischenglied des Robotergreifers eine in Richtung der zweiten Drehachse weisende Bauhöhe aufweisen, die höchstens so groß ist, wie die in Richtung der ersten Drehachse weisende Bauhöhe des Basisglieds. Des Weiteren alternativ oder ergänzend dazu kann der Fingerträger des Robotergreifers eine in Richtung der dritten Drehachse weisende Bauhöhe aufweisen, die höchstens so groß, wie die in Richtung der zweiten Drehachse weisenden Bauhöhe des Zwischenglieds.

In einer weiteren speziellen Ausführungsvariante kann der Robotergreifer derart gestaltet, dass
- das erste Drehgelenk ein das Basisglied umgebendes erstes Lager aufweist, insbesondere erstes Wälzlager mit einem Innenring, einer Innenringlaufbahn für Wälzkörper, einem Außenring und einer Außenringlaufbahn aufweist, wobei der Innenring an der rotationssymmetrischen Außenmantelwand des Basisglieds befestigt ist oder die Innenringlaufbahn an der rotationssymmetrischen Außenmantelwand des Basisglieds ausgebildet ist,
- das zweite Drehgelenk ein das Zwischenglied umgebendes zweites Lager aufweist, insbesondere zweites Wälzlager mit einem Innenring, einer Innenringlaufbahn für Wälzkörper, einem Außenring und einer Außenringlaufbahn aufweist, wobei der Innenring an der rotationssymmetrischen Außenmantelwand des Zwischenglieds befestigt ist oder die Innenringlaufbahn an der rotationssymmetrischen Außenmantelwand des Zwischenglieds ausgebildet ist, und
- das dritte Drehgelenk ein den Fingerträger umgebendes drittes Lager aufweist, insbesondere drittes Wälzlager mit einem Innenring, einer Innenringlaufbahn für Wälzkörper, einem Außenring und einer Außenringlaufbahn aufweist, wobei der Innenring an der rotationssymmetrischen Außenmantelwand des Fingerträgers befestigt ist oder die Innenringlaufbahn an der rotationssymmetrischen Außenmantelwand des Fingerträgers ausgebildet ist.

Durch eine solche Lagergestaltung, insbesondere Wälzlagergestaltung oder Gleitlagergestaltung kann eine besonders steife Anordnung von erstem Drehgelenk, zweitem Drehgelenk und drittem Drehgelenk erreicht werden. Demgemäß ist das zweite Wälzlager insoweit vollständig von dem ersten Wälzlager umgeben und das dritte Wälzlager vollständig vom zweiten Wälzlager und in Folge auch vollständig vom ersten Wälzlager umgeben. In einer abgewandelten Ausführungsvariante des Robotergreifers können ein oder mehrere der Wälzlager, insbesondere alle Wälzlager durch Gleitlager ersetzt sein.

Versorgungsleitungen, wie beispielsweise elektrische Leitungen, insbesondere zur Versorgung von elektrischen Antrieben oder Sensoren der Drehgelenke des Robotergreifers mit elektrischer Energie, können über ein oder mehrere der Drehgelenke hinweggeführt sein. In einer ersten Ausführungsvariante kann die wenigstens eine Versorgungsleitung das betreffende Drehgelenk überbrückend von dem jeweils einen Glied des Robotergreifers zu dem nächsten Glied des Robotergreifers führend, zumindest im Wesentlichen parallel zur betreffenden Drehachse verlegt sein.

Der Antriebsmotor kann insbesondere innerhalb des Greifergrundkörpers, innerhalb des Basisglieds, innerhalb des Zwischenglieds oder innerhalb des Fingerträgers angeordnet sein.

Wie bereits beschrieben, kann der Antriebsmotor prinzipiell an jeder beliebigen Gelenkstelle des Antriebsstrangs sein Drehmoment in den Antriebsstrangs einbringen. In konkreten Ausgestaltungen kann der einzige Antriebsmotor insbesondere ausgebildet sein, das Drehmoment in das erste Drehgelenk, in das zweite Drehgelenk oder in das dritte Drehgelenk einzubringen. Demgemäß kann je nach Ausführungsvariante der Antriebsmotor innerhalb des Greifergrundkörpers, innerhalb des Basisglieds, innerhalb des Zwischenglieds oder innerhalb des Fingerträgers angeordnet sein. Der Antriebsmotor kann beispielsweise im Greifergrundkörper oder im Basisglied angeordnet sein und die Antriebswelle des Antriebsmotors dann an das Basisglied bzw. an das Zwischenglied angekoppelt sein, d.h. der Antriebsmotor kann sein Drehmoment in das erste Drehgelenk einleiten.

Der Antriebsmotor, insbesondere der einzige Antriebsmotor des Robotergreifers, kann zum kraft- und/oder momentgeregelten Ansteuern ausgebildet sein.

Bei einem kraft- und/oder momentgeregelten Ansteuern des Antriebsmotors des Robotergreifers können die Drehgelenke des Robotergreifers insoweit hinsichtlich ihrer Steifigkeit parametriert sein. In allen Ausführungen kann dazu das kraft- und/oder momentgeregelten Ansteuern des Antriebsmotors des Robotergreifers mittels Impedanzregelung oder Admittanzregelung erfolgen. Eine Greifersteuerung oder eine Robotersteuerung kann eingerichtet sein, eine für die sichere Mensch-Roboter-Kooperation geeignete Nachgiebigkeit des ersten Greiferfingers am Robotergreifer insbesondere mittels Impedanzregelung oder Admittanzregelung zu erzeugen. In einer derartigen Nachgiebigkeitsregelung kann ein Handfahrbetrieb auch bedeuten, dass der erste Greiferfinger am Robotergreifer auch von einem Werker handgeführt bewegt werden können, d.h. der erste Greiferfinger des Robotergreifers auch manuelle verstellt werden kann.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht eines Industrieroboters in Art eines Sechsachs-Knickarmroboters;
- Fig. 2: eine perspektivische Ansicht eines Roboters in Art eines Leichtbauroboters;
- Fig. 3: eine perspektivische Ansicht eines Roboters in Art eines SCARA-Roboters;
- Fig. 4: eine perspektivische Darstellung eines beispielhaften Robotergreifers, der an einem Werkzeugflansch eines Roboterarms gemäß Fig. 2 befestigt ist und der einen erfindungsgemäß beweglichen Greiferfinger und zwei feststehende Greiferfinger aufweist;
- Fig. 5: eine perspektivische Darstellung eines abgewandelten Robotergreifers, der einen erfindungsgemäß beweglichen Greiferfinger und einen feststehenden Greiferfinger aufweist;
- Fig. 6: eine Draufsicht auf den Robotergreifer gemäß Fig. 5 von unten;
- Fig. 7: eine Schnittdarstellung des Robotergreifers gemäß Fig. 5;
- Fig. 8a: eine schematische Darstellung der Kopplungsgeometrie des Robotergreifers gemäß Fig. 5;
- Fig. 8b: eine perspektivische Darstellung einer Ausführungsform eines Robotergreifers mit beispielshaften Kopplungsvorrichtungen;
- Fig. 9: eine schematische Darstellung einer Schließbewegung des Robotergreifers gemäß Fig. 5 in einer Abfolge von drei aufeinanderfolgenden Momentaufnahmen; und
- Fig. 10: eine schematische Darstellung einer Annäherungsbewegung eines abgewandelten Robotergreifers in einer Abfolge von vier aufeinanderfolgenden Momentaufnahmen.

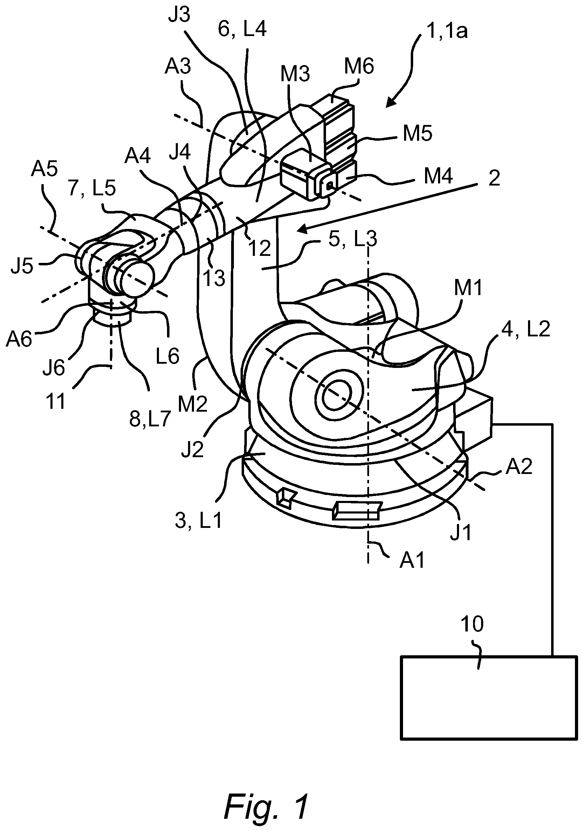

Die Fig. 1 zeigt einen Roboter 1, der einen Roboterarm 2 und eine Robotersteuerung 10 aufweist. Der Roboterarm 2 umfasst im Falle des vorliegenden Ausführungsbeispiels mehrere, nacheinander angeordnete und mittels Gelenke J1 bis J6 drehbar miteinander verbundene Glieder L1 bis L7.

Die Robotersteuerung 10 des Roboters 1 ist ausgebildet bzw. eingerichtet, ein Roboterprogramm auszuführen, durch welches die Gelenke J1 bis J6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Motoren M1 bis M6 verbunden, die ausgebildet sind, die Gelenke J1 bis J6 des Roboters 1 zu verstellen.

Bei den Gliedern L1 bis L7 handelt es sich im Falle des vorliegenden Ausführungsbeispiels eines Industrieroboters 1a um ein Gestell 3 und ein relativ zum Gestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Werkzeugflansch 8 ausgeführten Befestigungsvorrichtung zum Befestigen eines erfindungsgemäßen Robotergreifers 11. Die Schwinge 5 ist am unteren Ende, d.h. an dem Gelenk J2 der Schwinge 5, das auch als Schwingenlagerkopf bezeichnet werden kann, auf dem Karussell 4 um eine vorzugsweise horizontale Drehachse A2 schwenkbar gelagert.

Am oberen Ende der Schwinge 5 ist an dem ersten Gelenk J3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke J1 bis J6 sind durch jeweils einen der elektrischen Motoren M1 bis M6 über die Robotersteuerung 10 programmgesteuert antreibbar. Generell kann dazu zwischen jedem der Glieder L1 bis L7 und dem jeweils zugeordneten elektrischen Motoren M1 bis M6 ein Getriebe vorgesehen sein.

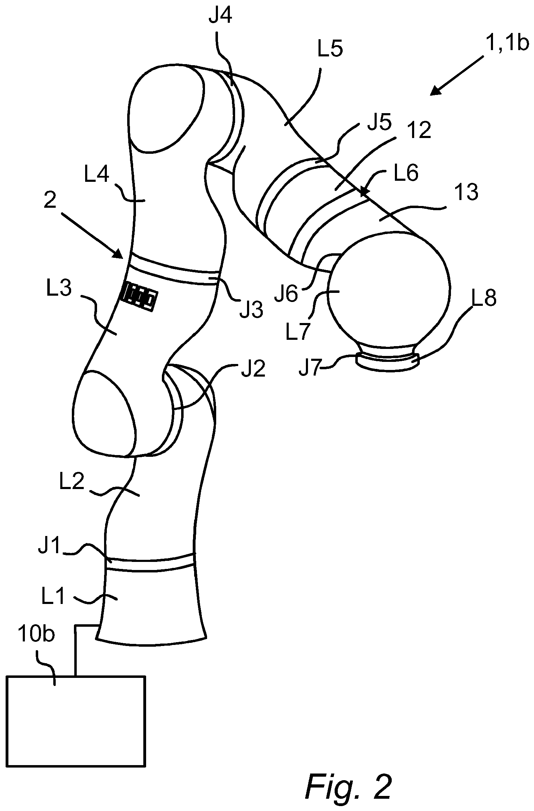

Die Fig. 2 zeigt einen Roboter 1 in einer beispielhaften Ausführung als ein so genannter Leichtbauroboter 1b, der einen Roboterarm 2 und eine Robotersteuerung 10b aufweist. Der Roboterarm 2 umfasst im Falle des vorliegenden Ausführungsbeispiels acht, nacheinander angeordnete und mittels Gelenke J1-J7 drehbar miteinander verbundene Glieder L1-L8. Im Falle des in Fig. 2 gezeigten Ausführungsbeispiels ist das Glied L8 als ein Werkzeugflansch ausgebildet, zum Befestigen eines erfindungsgemäßen Robotergreifers 11.

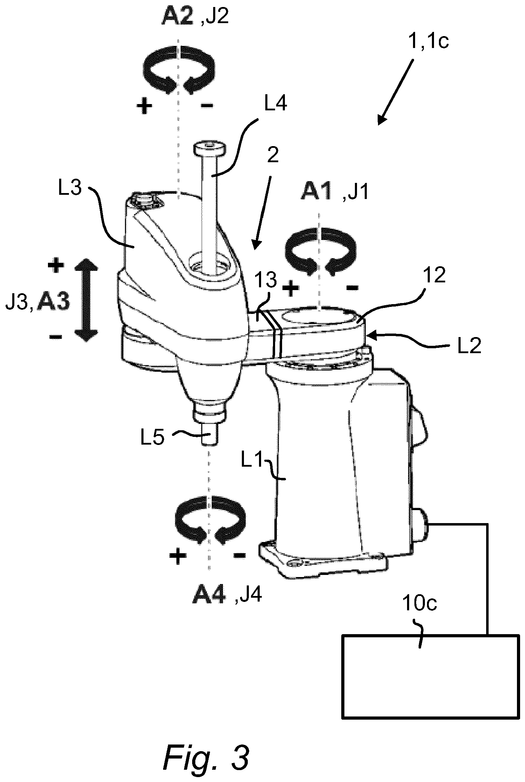

Die Fig. 3 zeigt einen Roboter 1 in einer beispielhaften Ausführung als ein so genannter SCARA-Roboter 1c, der einen Roboterarm 2 und eine Robotersteuerung 10c aufweist. Der Roboterarm 2 umfasst im Falle des vorliegenden Ausführungsbeispiels fünf, nacheinander angeordnete und mittels Gelenke J1-J4 drehbar miteinander verbundene Glieder L1-L5. Im Falle des in Fig. 3 gezeigten Ausführungsbeispiels ist das Glied L5 als ein Werkzeugflansch ausgebildet, zum Befestigen eines erfindungsgemäßen Robotergreifers 11.

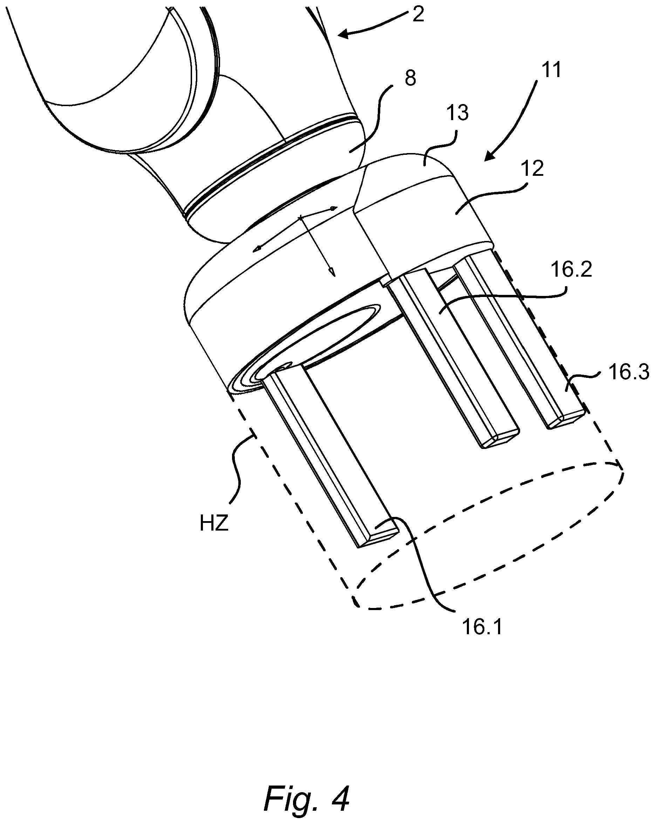

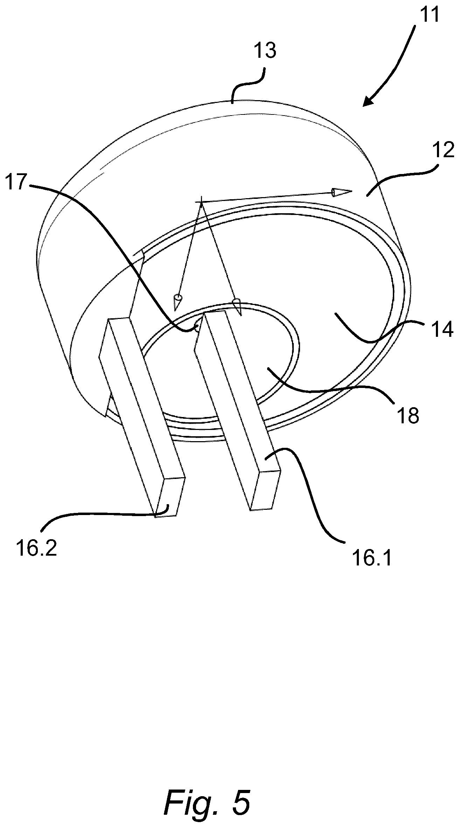

In den Figuren 4 bis 10 sind beispielhafte Ausführungsformen des erfindungsgemäßen Robotergreifers 11 schematisch gezeigt.

Der Robotergreifer 11 weist einen Greifergrundkörper 12 auf, der einen Anschlussflansch 13 umfasst, der zur Befestigung des Robotergreifers 11 an dem Werkzeugflansch 8 des Roboterarms 2 ausgebildet ist. Der Robotergreifer 11 weist außerdem ein Basisglied 14 auf, welches mittels eines ersten Drehgelenks 15.1 um eine erste Drehachse D1 drehbar am Greifergrundkörper 12 gelagert ist. Der Robotergreifer 11 weist des Weiteren einen ersten Greiferfinger 16.1 auf, der mittels eines zweiten Drehgelenks 15.2 um eine zweite Drehachse D2, die parallel zur ersten Drehachse D1 ausgerichtet ist, bezüglich des Basisglieds 14 drehbar gelagert ist. Der Robotergreifer 11 weist darüber hinaus wenigstens einen zweiten Greiferfinger 16.2, 16.3 auf.

Im Falle der Ausführungsbeispiele gemäß Fig. 4 bis Fig. 10 weist der Robotergreifer 11 einen Fingerträger 17 auf, an dem der erste Greiferfinger 16.1 befestigt ist. Der Fingerträger 17 ist mittels eines dritten Drehgelenks 15.3 um eine dritte Drehachse D3, die parallel sowohl zur ersten Drehachse D1 als auch zur zweiten Drehachse D2 ausgerichtet ist, an einem Zwischenglied 18 des Robotergreifers 11 drehbar gelagert. Das Zwischenglied 18 ist seinerseits mittels des zweiten Drehgelenks 15.2 um die zweite Drehachse D2 drehbar an dem Basisglied 14 gelagert.

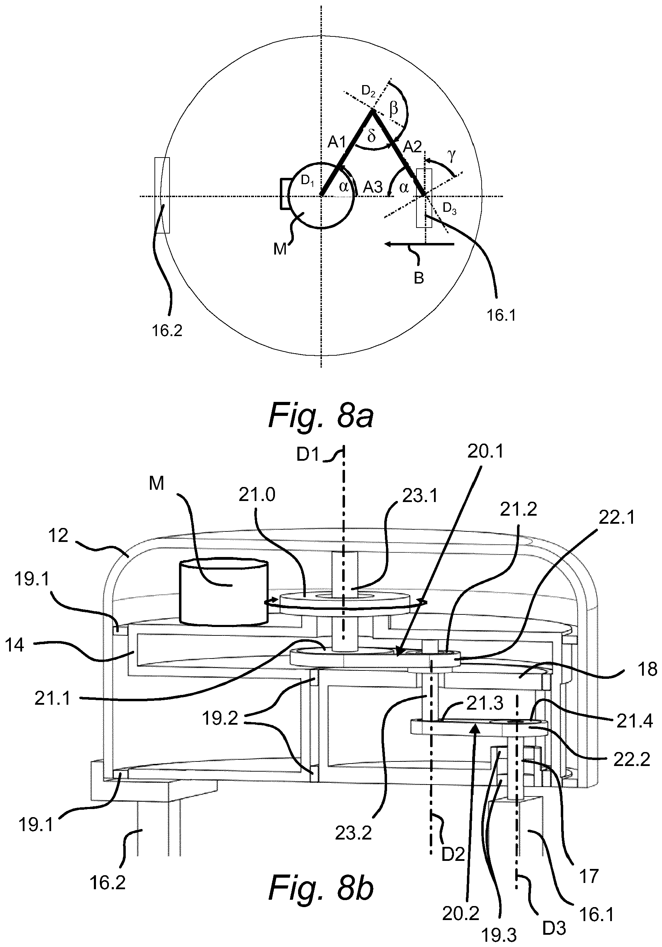

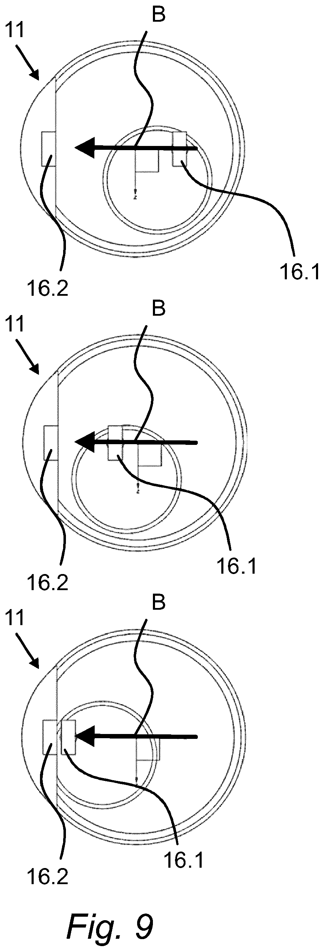

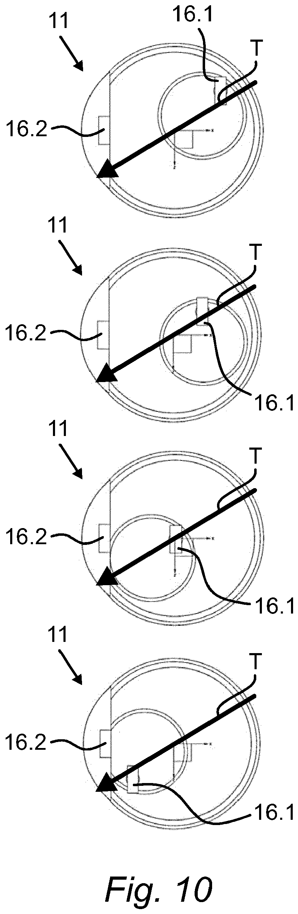

In diesen Ausführungsformen bilden die Glieder des Robotergreifers 11, welche durch den Greifergrundkörper 12, das Basisglied 14, das Zwischenglied 18 und dem Fingerträger 17 gebildet werden, eine kinematische Kette von Gliedern, die durch das erste Drehgelenk 15.1, das zweite Drehgelenk 15.2 und das dritte Drehgelenk 15.3 drehbar verstellt werden können, wie dies insbesondere zur Fig. 8a und Fig. 8b im Folgenden noch näher erläutert ist. Die drei Drehachsen D1, D2 und D3 des ersten Drehgelenk 15.1, des zweiten Drehgelenks 15.2 und des dritten Drehgelenks 15.3 sind dabei parallel zueinander ausgerichtet. Im Ergebnis kann dadurch der auf dem Fingerträger 17 montierte erste Greiferfinger 16.1 in der Ebene der zweiten Stirnseite des Greifergrundkörpers 12 auf einer geraden Bahn auf den feststehenden zweiten Greiferfinger 16.2 bzw. auf den dritten Greiferfinger 16.3 zubewegt werden bzw. von diesem wegbewegt werden, wie dies in der Fig. 9 und Fig. 10 näher dargestellt ist. Dies gilt dann, wenn die Abstände zwischen der ersten Drehachse D1 und der zweiten Drehachse D2 bzw. zwischen der zweiten Drehachse D2 und der dritten Drehachse D3 gleich sind.

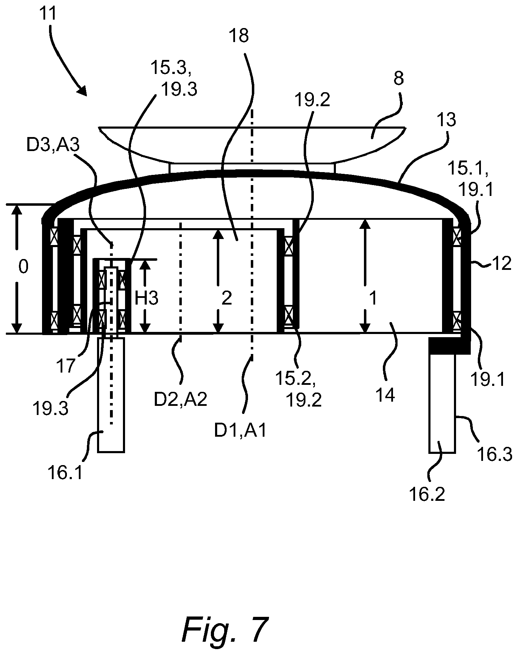

Das Basisglied 14 weist eine rotationssymmetrische Außenmantelwand auf, an der das Basisglied 14 vollständig innerhalb der Außenkontur des Greifergrundkörpers 12 drehbar gelagert ist, wie dies insbesondere in Fig. 7 gezeigt ist. Das Zwischenglied 18 des Robotergreifers 11 weist eine rotationssymmetrische Außenmantelwand auf, an der das Zwischenglied 18 vollständig innerhalb der Außenkontur des Basisglieds 14 drehbar gelagert ist. Der Fingerträger 17 des Robotergreifers 11 weist eine rotationssymmetrische Außenmantelwand auf, an der der Fingerträger 17 vollständig innerhalb der Außenkontur des Zwischenglieds 18 drehbar gelagert ist.

Wie insbesondere in Fig. 7 auch ersichtlich ist, weist das Basisglied 14 eine in Richtung der ersten Drehachse D1 weisende Bauhöhe H1 auf, die höchstens so groß ist, wie die in Richtung der ersten Drehachse D1 weisenden Bauhöhe H0 des Greifergrundkörpers 12. Das Zwischenglied 18 des Robotergreifers 11 weist dabei auch eine in Richtung der zweiten Drehachse D2 weisende Bauhöhe H2 auf, die höchstens so groß ist, wie die in Richtung der zweiten Drehachse D2 weisenden Bauhöhe H1 des Basisglieds 14. Der Fingerträger 17 des Robotergreifers 11 weist eine in Richtung der dritten Drehachse D3 weisende Bauhöhe H3 auf, die höchstens so groß ist, wie die in Richtung der dritten Drehachse D3 weisenden Bauhöhe H2 des Zwischenglieds 18.

In einer speziellen Ausführungsvariante weist das erste Drehgelenk 15.1 ein das Basisglied 14 umgebendes erstes Wälzlager 19.1 mit einem Innenring, einer Innenringlaufbahn für Wälzkörper, einem Außenring und einer Außenringlaufbahn auf, wobei der Innenring an der rotationssymmetrischen Außenmantelwand des Basisglieds 14 befestigt ist. Alternativ kann die Innenringlaufbahn an der rotationssymmetrischen Außenmantelwand des Basisglieds 14 ausgebildet sein.

Dabei weist das zweite Drehgelenk 15.2 ein das Zwischenglied 18 umgebendes zweites Wälzlager 19.2 mit einem Innenring, einer Innenringlaufbahn für Wälzkörper, einem Außenring und einer Außenringlaufbahn auf, wobei der Innenring an der rotationssymmetrischen Außenmantelwand des Zwischenglieds 18 befestigt ist. Alternativ kann die Innenringlaufbahn an der rotationssymmetrischen Außenmantelwand des Zwischenglieds 18 ausgebildet sein.

Außerdem weist das dritte Drehgelenk 15.3 ein den Fingerträger 17 umgebendes drittes Wälzlager 19.3 mit einem Innenring, einer Innenringlaufbahn für Wälzkörper, einem Außenring und einer Außenringlaufbahn auf, wobei der Innenring an der rotationssymmetrischen Außenmantelwand des Fingerträgers 17 befestigt ist. Alternativ kann die Innenringlaufbahn an der rotationssymmetrischen Außenmantelwand des Fingerträgers 17 ausgebildet sein.

Der erste Greiferfinger 16.1 und insbesondere auch der zweite Greiferfinger 16.2 weisen in einem senkrecht zu ihren Längserstreckungen liegenden Querschnitten eine von der Kreisform abweichende Querschnittskontur, insbesondere eine rechteckige Querschnittskontur auf.

Der zweite Greiferfinger 16.2 und ggf. der optionale dritte Greiferfinger 16.3 sind im Falle der dargestellten Ausführungsbeispiele starr bezüglich des Greifergrundkörpers 12 befestigt.

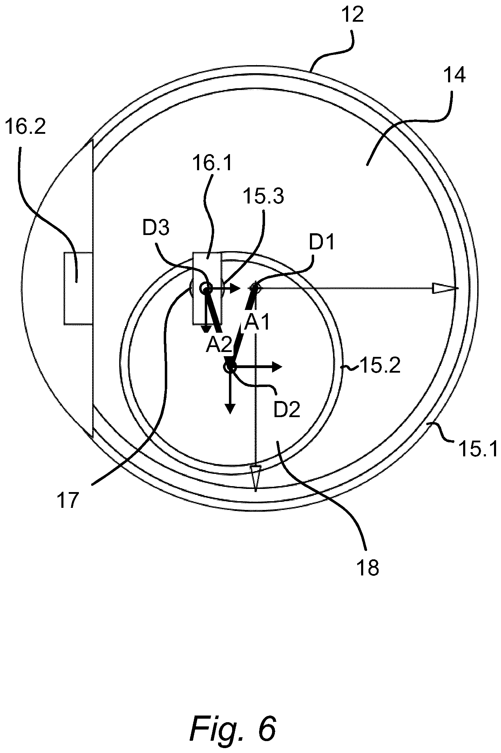

In der Fig. 6 ist ein repräsentatives Beispiel des Robotergreifers 11 gezeigt. Der Robotergreifer 11 weist den Greifergrundkörper 12, das Basisglied 14, welches mittels des ersten Drehgelenks 15.1 um eine erste (sich senkrecht aus der Zeichnungsebene heraus erstreckende) Drehachse D1 drehbar bezüglich des Greifergrundkörpers 12 gelagert ist, und das Zwischenglied 18 auf, welches mittels des zweiten Drehgelenks 15.2 bezüglich des Basisglieds 14 drehbar gelagert ist und zwar um eine zweite (sich senkrecht aus der Zeichnungsebene heraus erstreckende) Drehachse D2, die parallel zur ersten Drehachse D1 ausgerichtet und in einem konstanten ersten Abstand A1 von der ersten Drehachse D1 angeordnet ist. Der Robotergreifer 11 weist außerdem einen Fingerträger 17 auf, der den ersten Greiferfinger 16.1 trägt und der mittels eines dritten Drehgelenks 15.3 bezüglich des Zwischenglieds 18 drehbar gelagert ist und zwar um eine dritte (sich senkrecht aus der Zeichnungsebene heraus erstreckende) Drehachse D3, die parallel sowohl zur ersten Drehachse als auch zur zweiten Drehachse ausgerichtet und in einem konstanten zweiten Abstand A2 von der zweiten Drehachse D2 angeordnet ist, welcher zweite Abstand A2 dieselbe Länge aufweist, wie der erste Abstand A1.

In der Fig. 8a ist die Kopplungsgeometrie dargestellt und die Fig. 8b zeigt eine beispielhafte Ausführungsform der Kopplungsvorrichtungen.

Damit sich der erste Greiferfinger 16.1 in Pfeilrichtung B linear auf den zweiten Greiferfinger 16.2 zubewegen kann, ist der erste Abstand A1 von erster Drehachse D1 zu zweiter Drehachse D2 in gleicher Länge auszubilden, wie der zweite Abstand A2 zwischen der zweiten Drehachse D2 und der dritten Drehachse D3. Die erste Drehachse D1 wird von dem einzigen Antriebsmotor M des Robotergreifers 11 angetrieben. Wird die erste Drehachse D1 beispielsweise um den Winkel α gedreht, so ist bei der erfindungsgemäßen Kopplungsgeometrie die zweite Drehachse D2 um den doppelten Betrag des Winkels α in entgegen gesetzter Richtung zu drehen, d.h. um den Winkel β. Damit der erste Greiferfinger 16.1 seine Orientierung beibehält, und damit stets parallel zum zweiten Greiferfinger 16.2 ausgerichtet bleibt, muss sich die dritte Drehachse D3 um den halben Betrag des Winkels β in entgegen gesetzter Richtung drehen, d.h. um den Winkel γ, der identisch zu dem Winkel α ist. Die erste Drehachse D1, sowie die zweite Drehachse D2 und die dritte Drehachse D3 werden synchron von dem einzigen Antriebsmotor M bewegt. Dazu ist die erste Drehachse D1 bzw. das erste Drehgelenk 15.1 durch eine erste Kopplungsvorrichtung 20.1 mit der zweiten Drehachse D2 bzw. mit dem zweiten Drehgelenk 15.2 gekoppelt und die zweite Drehachse D2 bzw. das zweite Drehgelenk 15.2 durch eine zweite Kopplungsvorrichtung 20.2 mit der dritten Drehachse D3 bzw. mit dem dritten Drehgelenk 15.3 gekoppelt.

Der Antriebsmotor M ist am Greifergrundkörper 12 befestigt und treibt eine Antriebscheibe 21.0 an, die beispielsweise ein Zahnrad sein kann, an, über welche das Basisglied 14 im Greifergrundkörper 12 gedreht wird. Die Antriebscheibe 21.0 weist eine interne Bohrung auf, durch die eine erste Zwischenwelle 23.1 hindurchreicht. Mit der ersten Zwischenwelle 23.1, die koaxial zur Drehachse D1 mit ihrer Oberseite starr mit dem Greifergrundkörper 12 verbunden ist, ist die erste Scheibe 21.1 mit ihrer Unterseite starr verbunden. In der ersten Kopplungsvorrichtung 20.1 ist die erste Scheibe 21.1 mit einer zweiten Scheibe 21.2, die beispielsweise eine Synchronscheibe sein kann, und die nur einen halb so großen Durchmesser aufweist wie die erste Scheibe 21.1, über einen ersten Zahnriemen 22.1 verbunden. Die zweite Scheibe 21.2 ist zentrisch auf der Drehachse D2 mit dem Zwischenglied 18 verbunden. Die zweite Scheibe 21.2 weist eine interne Bohrung auf, durch die eine zweite Zwischenwelle 23.2 hindurchreicht. Die zweite Zwischenwelle 23.2 ist auf ihrer Oberseite starr mit dem Basisglied 14 verbunden und auf ihrer Unterseite befindet sich eine dritte Scheibe 21.3, die beispielsweise eine Synchronscheibe sein kann. Die dritte Scheibe 21.3 ist in der zweiten Kopplungsvorrichtung 20.2 über einen zweiten Zahnriemen 22.2 mit einer vierten Scheibe 21.4 verbunden, die beispielsweise eine Synchronscheibe sein kann, und die einen doppelt so großen Durchmesser aufweist, wie die dritte Scheibe 21.3. Über die vierte Scheibe 21.4 wird der Fingerträger 17 bewegt. Das Basisglied 14 ist durch das erste Lager bzw. die ersten Wälzlager 19.1 in dem Greifergrundkörper 12 drehbar gelagert. Das Zwischenglied 18 ist durch das zweite Lager bzw. die zweiten Wälzlager 19.2 in dem Basisglied 14 drehbar gelagert. Der Fingerträger 17 ist durch ein drittes Lager bzw. ein drittes Wälzlager 19.3 in dem Zwischenglied 18 gelagert.

Dabei ist das erste Drehgelenk 15.1 durch die erste Kopplungsvorrichtung 20.1 mit dem zweiten Drehgelenk 15.2 in einem festgelegten ersten Übersetzungsverhältnis von 1 zu minus 2 gekoppelt und das zweite Drehgelenk 15.2 ist durch die zweite Kopplungsvorrichtung 20.2 mit dem dritten Drehgelenk 15.3 in einem festgelegten zweiten Übersetzungsverhältnis von 2 zu minus 1 gekoppelt. Der Robotergreifer 11 weist darüber hinaus einen den ersten Greiferfinger 16.1 bewegenden Antriebsmotor M auf, der ausgebildet ist, den ersten Greiferfinger 16.1 durch gleichzeitiges Verstellen des ersten Drehgelenks 15.1, des zweiten Drehgelenks 15.2 und des dritten Drehgelenks 15.3 zu bewegen.

Das erste Drehgelenk 15.1, das zweite Drehgelenk 15.2 und das dritte Drehgelenk 15.3 bilden zusammen mit der ersten Kopplungsvorrichtung 20.1 und der zweiten Kopplungsvorrichtung 20.2 einen Antriebsstrang, der ausgebildet ist, angetrieben von dem Antriebsmotor M, den ersten Greiferfinger 16.1 auf einer geraden Bahn B zu bewegen, wie dies beispielsweise in der Fig. 9 und Fig. 10 aufgezeigt ist, ohne dass sich die Orientierung des ersten Greiferfingers 16.1 dabei ändert. In diesen Ausführungsbeispielen weist der Robotergreifer 11 einen einzelnen, bezüglich des Greifergrundkörpers 12 feststehenden, zweiten Greiferfinger 16.2 auf.

Die Fig. 9 zeigt dabei eine Ausführungsform bei der das erste Drehgelenk 15.1, das zweite Drehgelenk 15.2 und das dritte Drehgelenk 15.3 zusammen mit der ersten Kopplungsvorrichtung 20.1 und der zweiten Kopplungsvorrichtung 20.2 einen Antriebsstrang bilden, der ausgebildet ist, den ersten Greiferfinger 16.1 in einer ersten Antriebsrichtung des Antriebsmotors M auf einer geraden Bahn B auf den feststehenden zweiten Greiferfinger 16.2 zu zubewegen und in einer entgegengesetzten, zweiten Antriebsrichtung des Antriebsmotors M auf der geraden Bahn B von dem feststehenden zweiten Greiferfinger weg zubewegen, ohne dass sich die Orientierung des ersten Greiferfingers 16.1 dabei ändert.

Die Fig. 10 zeigt hingegen eine Ausführungsform bei der das erste Drehgelenk 15.1, das zweite Drehgelenk 15.2 und das dritte Drehgelenk 15.3 zusammen mit der ersten Kopplungsvorrichtung 20.1 und der zweiten Kopplungsvorrichtung 20.2 einen Antriebsstrang bilden, der ausgebildet ist, den ersten Greiferfinger 16.1 in einer ersten Antriebsrichtung des Antriebsmotors M auf einer tangentialen Bahn T an den feststehenden zweiten Greiferfinger 16.2 anzunähern und in einer entgegengesetzten zweiten Antriebsrichtung des Antriebsmotors M auf der tangentialen Bahn T von dem feststehenden zweiten Greiferfinger 16.2 weg zu bewegen, ohne dass sich die Orientierung des ersten Greiferfingers 16.1 dabei ändert.

In allen dargestellten Ausführungsvarianten weist der Robotergreifer 11 einen einzigen Antriebsmotor M auf, der ausgebildet ist, den ersten Greiferfinger 16.1 relativ zum Greifergrundkörper 12 auf einer geraden Bahn B, T zu verstellen, ohne dass sich die Orientierung des ersten Greiferfingers 16.1 dabei ändert.

## Patentansprüche

1. Robotergreifer, aufweisend einen Greifergrundkörper (12), ein Basisglied (14), welches mittels eines ersten Drehgelenks (15.1) um eine erste Drehachse (D1) drehbar bezüglich des Greifergrundkörpers (12) gelagert ist, und ein Zwischenglied (18), welches mittels eines zweiten Drehgelenks (15.2) bezüglich des Basisglieds (14) drehbar gelagert ist und zwar um eine zweite Drehachse (D2), die parallel zur ersten Drehachse (D1) ausgerichtet und in einem konstanten ersten Abstand (A1) von der ersten Drehachse (D1) angeordnet ist, des Weiteren aufweisend einen Fingerträger (17), der einen ersten Greiferfinger (16.1) trägt und der mittels eines dritten Drehgelenks (15.3) bezüglich des Zwischenglieds (18) drehbar gelagert ist und zwar um eine dritte Drehachse (D3), die parallel sowohl zur ersten Drehachse (D1) als auch zur zweiten Drehachse (D2) ausgerichtet und in einem konstanten zweiten Abstand (A2) von der zweiten Drehachse (D2) angeordnet ist, welcher zweite Abstand (A2) dieselbe Länge aufweist, wie der erste Abstand (A1), wobei
- das erste Drehgelenk (15.1) durch eine erste Kopplungsvorrichtung (20.1) mit dem zweiten Drehgelenk (15.2) in einem festgelegten ersten Übersetzungsverhältnis von 1 zu minus 2 gekoppelt ist und das zweite Drehgelenk (15.2) durch eine zweite Kopplungsvorrichtung (20.2) mit dem dritten Drehgelenk (15.3) in einem festgelegten zweiten Übersetzungsverhältnis von 2 zu minus 1 gekoppelt ist und
- der Robotergreifer (11) einen den ersten Greiferfinger (16.1) bewegenden Antriebsmotor (M) aufweist, der ausgebildet ist, den ersten Greiferfinger (16.1) durch gleichzeitiges Verstellen des ersten Drehgelenks (15.1), des zweiten Drehgelenks (15.2) und des dritten Drehgelenks (15.3) zu bewegen, **dadurch gekennzeichnet, dass** das erste Drehgelenk (15.1), das zweite Drehgelenk (15.2) und das dritte Drehgelenk (15.3) zusammen mit der ersten Kopplungsvorrichtung (20.1) und der zweiten Kopplungsvorrichtung (20.2) einen Antriebsstrang bilden, der ausgebildet ist, angetrieben von dem Antriebsmotor (M), den ersten Greiferfinger (16.1) auf einer geraden Bahn zu bewegen, ohne dass sich die Orientierung des ersten Greiferfingers (16.1) dabei ändert.

2. Robotergreifer nach Anspruch 1, **dadurch gekennzeichnet, dass** der Robotergreifer (11) wenigstens einen bezüglich des Greifergrundkörpers (12) feststehenden zweiten Greiferfinger (16.2) aufweist.

3. Robotergreifer nach Anspruch 2, **dadurch gekennzeichnet, dass** das erste Drehgelenk (15.1), das zweite Drehgelenk (15.2) und das dritte Drehgelenk (15.3) zusammen mit der ersten Kopplungsvorrichtung (20.1) und der zweiten Kopplungsvorrichtung (20.2) einen Antriebsstrang bilden, der ausgebildet ist, den ersten Greiferfinger (16.1) in einer ersten Antriebsrichtung des Antriebsmotors (M) auf einer geraden Bahn auf den feststehenden zweiten Greiferfinger (16.2) zu zubewegen und in einer entgegengesetzten zweiten Antriebsrichtung des Antriebsmotors (M) auf einer geraden Bahn von dem feststehenden zweiten Greiferfinger (16.2) weg zubewegen, ohne dass sich die Orientierung des ersten Greiferfingers (16.1) dabei ändert.

4. Robotergreifer nach Anspruch 2, **dadurch gekennzeichnet, dass** das erste Drehgelenk (15.1), das zweite Drehgelenk (15.2) und das dritte Drehgelenk (15.3) zusammen mit der ersten Kopplungsvorrichtung (20.1) und der zweiten Kopplungsvorrichtung (20.2) einen Antriebsstrang bilden, der ausgebildet ist, den ersten Greiferfinger (16.1) in einer ersten Antriebsrichtung des Antriebsmotors (M) auf einer tangentialen Bahn an den feststehenden zweiten Greiferfinger (16.2) anzunähern und in einer entgegengesetzten zweiten Antriebsrichtung des Antriebsmotors (M) auf einer tangentialen Bahn von dem feststehenden zweiten Greiferfinger (16.2) weg zu bewegen, ohne dass sich die Orientierung des ersten Greiferfingers (16.1) dabei ändert, wobei die tangentiale Bahn eine gerade Bahn ist, entlang welcher der erste Greiferfinger (16.1) sich bewegen kann, und die schräg an dem zweiten Greiferfinger (16.2) vorbei läuft, so dass der erste Greiferfinger (16.1) den zweiten Greiferfinger (16.2) gar nicht schneidet, sondern sich der erste Greiferfinger (16.1) dem zweiten Greiferfinger (16.2) zunächst nur annähert, um in einem gewissen Minimalabstand an dem zweiten Greiferfinger (16.2) sich vorbeizubewegen.

5. Robotergreifer nach einem der Ansprüche 1 bis 4, **dadurch gekennzeichnet, dass** der Greifergrundkörper (12) einen Anschlussflansch (13) aufweist, der zur Befestigung des Robotergreifers (11) an einem Werkzeugflansch (8) eines Roboterarms (2) ausgebildet ist.

6. Robotergreifer nach Anspruch 5, **dadurch gekennzeichnet, dass** der Robotergreifer einen einzigen Antriebsmotor (M) aufweist, der ausgebildet ist, den ersten Greiferfinger (16.1) relativ zum Greifergrundkörper (12) auf einer geraden Bahn zu verstellen, ohne dass sich die Orientierung des ersten Greiferfingers (16.1) dabei ändert.

7. Robotergreifer nach einem der Ansprüche 1 bis 6, **dadurch gekennzeichnet, dass** das Basisglied (14) eine rotationssymmetrische Außenmantelwand aufweist, an der das Basisglied (14) vollständig innerhalb der Außenkontur des Greifergrundkörpers (12) drehbar gelagert ist, das Zwischenglied (18) des Robotergreifers (11) eine rotationssymmetrische Außenmantelwand aufweist, an der das Zwischenglied (18) vollständig innerhalb der Außenkontur des Basisglieds (14) drehbar gelagert ist, und/oder der Fingerträger (17) des Robotergreifers (11) eine rotationssymmetrische Außenmantelwand aufweist, an der der Fingerträger (17) vollständig innerhalb der Außenkontur des Zwischenglieds (18) drehbar gelagert ist.

8. Robotergreifer nach Anspruch 7, **dadurch gekennzeichnet, dass** das Basisglied (14) eine in Richtung der ersten Drehachse (D1) weisende Bauhöhe (H1) aufweist, die höchstens so groß ist, wie die in Richtung der ersten Drehachse (D1) weisende Bauhöhe (H0) des Greifergrundkörpers (12), das Zwischenglied (18) des Robotergreifers (11) eine in Richtung der zweiten Drehachse (D2) weisende Bauhöhe (H2) aufweist, die höchstens so groß ist, wie die in Richtung der ersten Drehachse (D1) weisenden Bauhöhe (H1) des Basisglieds (14), und der Fingerträger (17) des Robotergreifers (11) eine in Richtung der dritten Drehachse (D3) weisende Bauhöhe (H3) aufweist, die höchstens so groß ist, wie die in Richtung der zweiten Drehachse (D2) weisende Bauhöhe (H2) des Zwischenglieds (18).

9. Robotergreifer nach Anspruch 7 oder 8, **dadurch gekennzeichnet, dass**
- das erste Drehgelenk (15.1) ein das Basisglied (14) umgebendes erstes Lager aufweist, insbesondere erstes Wälzlager (19.1) mit einem Innenring, einer Innenringlaufbahn für Wälzkörper, einem Außenring und einer Außenringlaufbahn aufweist, wobei der Innenring an der rotationssymmetrischen Außenmantelwand des Basisglieds (14) befestigt ist oder die Innenringlaufbahn an der rotationssymmetrischen Außenmantelwand des Basisglieds (14) ausgebildet ist,
- das zweite Drehgelenk (15.2) ein das Zwischenglied (18) umgebendes zweites Lager aufweist, insbesondere zweites Wälzlager (19.2) mit einem Innenring, einer Innenringlaufbahn für Wälzkörper, einem Außenring und einer Außenringlaufbahn aufweist, wobei der Innenring an der rotationssymmetrischen Außenmantelwand des Zwischenglieds (18) befestigt ist oder die Innenringlaufbahn an der rotationssymmetrischen Außenmantelwand des Zwischenglieds (18) ausgebildet ist, und
- das dritte Drehgelenk (15.3) ein den Fingerträger (17) umgebendes drittes Lager aufweist, insbesondere drittes Wälzlager (19.3) mit einem Innenring, einer Innenringlaufbahn für Wälzkörper, einem Außenring und einer Außenringlaufbahn aufweist, wobei der Innenring an der rotationssymmetrischen Außenmantelwand des Fingerträgers (17) befestigt ist oder die Innenringlaufbahn an der rotationssymmetrischen Außenmantelwand des Fingerträgers (17) ausgebildet ist.

10. Robotergreifer nach einem der Ansprüche 1 bis 9, **dadurch gekennzeichnet, dass** der Antriebsmotor (M) innerhalb des Greifergrundkörpers (12), innerhalb des Basisglieds (14), innerhalb des Zwischenglieds (18) oder innerhalb des Fingerträgers (17) angeordnet ist.

11. Robotergreifer nach einem der Ansprüche 1 bis 10, **dadurch gekennzeichnet, dass** der Antriebsmotor (M) zum kraft- und/oder momentgeregelten Ansteuern ausgebildet ist.

12. Robotergreifer nach einem der Ansprüche 1 bis 11, **dadurch gekennzeichnet, dass** der erste Greiferfinger (16.1) in einem senkrecht zu seiner Längserstreckung liegenden Querschnitt eine von der Kreisform abweichende Querschnittskontur aufweist.

## Claims

1. Robot gripper, having a main gripper body (12), a base link (14), which is mounted to be rotatable by means of a first rotational joint (15.1) about a first rotational axis (D1) relative to the main gripper body (12), and an intermediate link (18), which is mounted to be rotatable by means of a second rotational joint (15.2) relative to the base link (14), namely about a second rotational axis (D2), which is aligned to be parallel to the first rotational axis (D1) and is arranged at a constant first distance (A1) from the first rotational axis (D1), further comprising a finger support (17) which supports a first gripper finger (16.1) and which is mounted to be rotatable by means of a third rotational joint (15.3) relative to the intermediate link (18), namely about a third rotational axis (D3), which is aligned to be parallel both to the first rotational axis (D1) and also to the second rotational axis (D2) and is arranged at a constant second distance (A2) from the second rotational axis (D2), which second distance (A2) has the same length as the first distance (A1), wherein
- the first rotational joint (15.1) is coupled by a first coupling device (20.1) to the second rotational joint (15.2) with a set first transmission ratio of 1 to minus 2 and the second rotational joint (15.2) is coupled by a second coupling device (20.2) to the third rotational joint (15.3) with a set second transmission ratio of 2 to minus 1 and
- the robot gripper (11) has a drive motor (M) moving the first gripper finger (16.1), which drive motor is designed to move the first gripper finger (16.1) with a simultaneous adjustment of the first rotational joint (15.1), the second rotational joint (15.2) and the third rotational joint (15.3), **characterised in that** the first rotational joint (15.1), the second rotational joint (15.2) and the third rotational joint (15.3) together with the first coupling device (20.1) and the second coupling device (20.2) form a drive train, which is designed, driven by the drive motor (M), to move the first gripper finger (16.1) on a straight path, without the orientation of the first gripper finger (16.1) changing.

2. Robot gripper according to claim 1, **characterised in that** the robot gripper (11) comprises at least one second gripper finger (16.2) which is fixed relative to the main gripper body (12).

3. Robot gripper according to claim 2, **characterised in that** the first rotational joint (15.1), the second rotational joint (15.2) and the third rotational joint (15.3) together with the first coupling device (20.1) and the second coupling device (20.2) form a drive train, which is designed to move the first gripper finger (16.1) in a first drive direction of the drive motor (M) on a straight path towards the fixed second gripper finger (16.2) and to move in an opposite second drive direction of the drive motor (M) on a straight path away from the fixed second gripper finger (16.2) without the orientation of the first gripper finger (16.1) changing.

4. Robot gripper according to claim 2, **characterised in that** the first rotational joint (15.1), the second rotational joint (15.2) and the third rotational joint (15.3) together with the first coupling device (20.1) and the second coupling device (20.2) form a drive train, which is designed to move the first gripper finger (16.1) in a first drive direction of the drive motor (M) on a tangential path closer to the fixed second gripper finger (16.2) and to move in an opposite second drive direction of the drive motor (M) on a tangential path away from the fixed second gripper finger (16.2), without the orientation of the first gripper finger (16.1) changing, wherein the tangential path is a straight path along which the first gripper finger (16.1) can move and which runs obliquely past the second gripper finger (16.2), so that the first gripper finger (16.1) does not intersect the second gripper finger (16.2) at all, but the first gripper finger (16.1) firstly only approaches the second gripper finger (16.2) in order to move with a specific minimum distance past the second gripper finger (16.2).

5. Robot gripper according to any of claims 1 to 4, **characterised in that** the main gripper body (12) has a connecting flange (13) which is designed for securing the robot gripper (11) onto a tool flange (8) of a robot arm (2).

6. Robot gripper according to claim 5, **characterised in that** the robot gripper has a single drive motor (M) which is designed to adjust the first gripper finger (16.1) relative to the main gripper body (12) on a straight path, without the orientation of the first gripper finger (16.1) changing.

7. Robot gripper according to any of claims 1 to 6, **characterised in that** the base link (14) has a rotationally symmetrical outer casing wall, on which the base link (14) is fully rotatably mounted inside the outer contour of the main gripper body (12), the intermediate link (18) of the robot gripper (11) has a rotationally symmetrical outer casing wall, on which the intermediate link (18) is fully rotatably mounted inside the outer contour of the base link (14) and/or the finger support (17) of the robot gripper (11) has a rotationally symmetrical outer casing wall, on which the finger support (17) is fully rotatably mounted inside the outer contour of the intermediate link (18).

8. Robot gripper according to claim 7, **characterised in that** the base link (14) has a height (H1) pointing in the direction of the first rotational axis (D1), which is at most as large as the height (H0) of the main gripper body (12) pointing in the direction of the first rotational axis (D1), the intermediate link (18) of the robot gripper (11) has a height (H2) pointing in the direction of the second rotational axis (D2), which is at most as large as the height (H1) of the base link (14) pointing in the direction of the first rotational axis (D1), and the finger support (17) of the robot gripper (11) has a height (H3) pointing in the direction of the third rotational axis (D3), which is at most as large as the height (H2) of the intermediate link (18) pointing in the direction of the second rotational axis (D2).

9. Robot gripper according to claim 7 or 8, **characterised in that**
- the first rotational joint (15.1) has a first bearing surrounding the base link (14), specifically a first roller bearing (19.1) with an inner ring, an inner raceway for rolling elements, an outer ring and an outer raceway, wherein the inner ring is secured onto the rotationally symmetrical outer casing wall of the base link (14) or the inner raceway is formed on the rotationally symmetrical outer casing wall of the base link (14),
- the second rotational joint (15.2) has a second bearing surrounding the intermediate link (18), specifically a second roller bearing (19.2) with an inner ring, an inner raceway for rolling elements, an outer ring and an outer raceway, wherein the inner ring is secured onto the rotationally symmetrical outer casing wall of the intermediate link (18) or the inner raceway is formed on the rotationally symmetrical outer casing wall of the intermediate link (18), and
- the third rotational joint (15.3) has a third bearing surrounding the finger support (17), specifically a third roller bearing (19.3) with an inner ring, an inner raceway for rolling elements, an outer ring and an outer raceway, wherein the inner ring is secured onto the rotationally symmetrical outer casing wall of the finger support (17) or the inner raceway is formed on the rotationally symmetrical outer casing wall of the finger support (17).

10. Robot gripper according to any of claims 1 to 9, **characterised in that** the drive motor (M) is arranged inside the main gripper body (12), inside the base link (14), inside the intermediate link (18) or inside the finger support (17).

11. Robot gripper according to any of claims 1 to 10, **characterised in that** the drive motor (M) is designed for force-controlled and/or torque-controlled operation.

12. Robot gripper according to any of claims 1 to 11, **characterised in that** the first gripper finger (16.1) in a cross-section perpendicular to its longitudinal extension has a cross-sectional contour that differs from the circular form.

## Revendications

1. Préhenseur de robot, présentant un corps de base de préhenseur (12), un élément de base (14) qui est monté rotatif autour d'un premier axe de rotation (D1) par rapport au corps de base de préhenseur (12), au moyen d'une première articulation pivotante (15.1), et un élément intermédiaire (18) qui est monté rotatif par rapport à l'élément de base (14) au moyen d'une deuxième articulation pivotante (15.2) et notamment autour d'un deuxième axe de rotation (D2) qui est aligné parallèlement au premier axe de rotation (D1) et agencé à une première distance constante (A1) du premier axe de rotation (D1), comprenant en outre un support de doigt (17) qui porte un premier doigt de préhension (16.1) et qui est monté rotatif par rapport à l'élément intermédiaire (18) au moyen d'une troisième articulation pivotante (15.3), et notamment autour d'un troisième axe pivotant (D3) qui est aligné parallèlement non seulement au premier axe pivotant (D1), mais aussi au deuxième axe de rotation (D2) et qui est agencé à une deuxième distance constante (A2) du deuxième axe pivotant (D2), laquelle deuxième distance (A2) présente la même longueur que la première distance (A1),
- la première articulation pivotante (15.1) étant accouplée par un premier dispositif d'accouplement (20.1) à la deuxième articulation pivotante (15.2) dans un premier rapport de transmission fixe de 1 à moins 2 et la deuxième articulation pivotante (15.2) étant accouplée par un deuxième dispositif d'accouplement (20.2) à la troisième articulation pivotante (15.3) dans un deuxième rapport de transmission fixe de 2 à moins 1, et
- le préhenseur de robot (11) présente un moteur d'entraînement (M) qui déplace le premier doigt de préhension (16.1) et qui est conçu pour déplacer le premier doigt de préhension (16.1) en ajustant simultanément la première articulation pivotante (15.1), la deuxième articulation pivotante (15.2) et la troisième articulation pivotante (15.3), **caractérisé en ce que** la première articulation pivotante (15.1), la deuxième articulation pivotante (15.2) et la troisième articulation pivotante (15.3) forment ensemble avec le premier dispositif d'accouplement (20.1) et le deuxième dispositif d'accouplement (20.2) une chaîne cinématique qui, entraînée par le moteur d'entraînement (M), est réalisée pour déplacer le premier doigt de préhension (16.1) sur une trajectoire rectiligne sans que l'orientation du premier doigt de préhension (16.1) change.

2. Préhenseur de robot selon la revendication 1, **caractérisé en ce que** le préhenseur de robot (11) présente au moins un deuxième doigt de préhension (16.2) qui est fixe par rapport au corps de base d préhenseur (12).

3. Préhenseur de robot selon la revendication 2, **caractérisée en ce que** la première articulation pivotante (15.1), la deuxième articulation pivotante (15.2) et la troisième articulation pivotante (15.3) forment avec le premier dispositif d'accouplement (20.1) et le deuxième dispositif d'accouplement (20.2) une chaîne cinématique qui est réalisée pour déplacer le premier doigt de préhension (16.a) dans une première direction d'entraînement du moteur d'entraînement (M) sur une trajectoire rectiligne, est réalisée pour déplacer le premier doigt de préhension (16.1) sur une trajectoire rectiligne en direction du deuxième doigt de préhension (16.2) fixe et pour le déplacer sur une trajectoire rectiligne dans une deuxième direction d'entraînement opposée du moteur d'entraînement en s'éloignant du deuxième doigt de préhension fixe (16.2), sans que l'orientation du premier doigt de préhension (16.1) change.

4. Préhenseur de robot selon la revendication 2, **caractérisée en ce que** la première articulation pivotante (15.1), la deuxième articulation pivotante (15.2) et la troisième articulation pivotante (15.3) forment avec le premier dispositif d'accouplement (20.1) et le deuxième dispositif d'accouplement (20.2) une chaîne cinématique qui est réalisée pour rapprocher le premier doigt de préhension (16.1) du deuxième doigt de préhension (16.2) fixe dans une première direction d'entraînement du moteur d'entraînement (M) sur une trajectoire tangentielle et pour l'éloigner du deuxième doigt de préhension (16.2) fixe, dans une deuxième direction d'entraînement du moteur d'entraînement (M) sur une trajectoire tangentielle, sans que l'orientation du premier doigt de préhension (16.1) change, la trajectoire tangentielle étant une trajectoire rectiligne le long de laquelle le premier doigt de préhension (16.1) peut se déplacer, le trajet tangentiel étant un trajet rectiligne le long duquel le premier doigt de préhension (16.1) peut se déplacer et qui passe obliquement devant le deuxième doigt de préhension (16.2), de telle sorte que le premier doigt de préhension (16.1) ne coupe pas du tout le deuxième doigt de préhension (16.2), mais le premier doigt de préhension (16.1) se rapproche tout d'abord seulement du deuxième doigt de préhension (16.2) afin de passer devant le deuxième doigt de préhension (16.2) à une certaine distance minimale.

5. Préhenseur de robot selon l'une quelconque des revendications 1 à 4, **caractérisé en ce que** le corps de base de préhenseur (12) présente une bride de raccordement (13) qui est réalisée pour fixer le préhenseur de robot (11) à une bride d'outil (8) d'un bras de robot (2).

6. Préhenseur de robot selon la revendication 5, **caractérisé en ce que** le préhenseur de robot présente un seul moteur d'entraînement (M) qui est réalisé pour déplacer le premier doigt de préhension (16.1) par rapport au corps de base de préhenseur (12) sur une trajectoire rectiligne, sans que l'orientation du premier doigt de préhension (16.1) change.

7. Préhenseur de robot selon l'une quelconque des revendications 1 à 6, **caractérisé en ce que** l'élément de base (14) présente une paroi d'enveloppe extérieure à symétrie de révolution, sur laquelle l'élément de base (14) est monté rotatif complètement à l'intérieur du contour extérieur du corps de base de préhenseur (12), l'élément intermédiaire (18) du préhenseur de robot (11) présente une paroi d'enveloppe extérieure à symétrique de révolution, sur laquelle l'élément intermédiaire (18) est monté rotatif complètement à l'intérieur du contour extérieur de l'élément de base (14), et/ou le porte doigts (17) du préhenseur de robot (11) présente une paroi d'enveloppe extérieure à symétrie de révolution sur laquelle le porte-doigts (17) est monté rotatif complètement à l'intérieur du contour extérieur de l'élément intermédiaire (18).

8. Préhenseur de robot selon la revendication 7, **caractérisé en ce que** l'élément de base (14) présente une hauteur globale (H1) dirigée dans la direction du premier axe de rotation (D1) qui est au plus aussi grande que la hauteur globale (H0) du corps de base (12) du préhenseur orientée dans la direction du premier axe de rotation (D1), l'élément intermédiaire (18) du préhenseur de robot (11) présente une hauteur globale (H2) dirigée dans la direction du deuxième axe de rotation (D2), qui est au plus aussi grande que la hauteur (H1) de l'élément de base (14) orienté dans la direction du premier axe de rotation (D1), et le porte-doigts (17) du préhenseur de robot (11) présente une hauteur globale (H3) orientée dans la direction du troisième axe de rotation (D3) qui est au plus aussi grande que la hauteur globale (H2) de l'élément intermédiaire (18) dirigé dans la direction du deuxième axe de rotation (D2).

9. Préhenseur de robot selon la revendication 7 ou 8, **caractérisée en ce que**
- la première articulation pivotante (15.1) présente un premier palier entourant l'élément de base (14), en particulier un premier palier à roulement (19.1) avec une bague intérieure, un chemin de roulement de bague intérieure pour éléments roulants, une bague extérieure et un chemin de roulement de bague extérieure, la bague intérieure étant fixée sur la paroi d'enveloppe extérieure à symétrie de révolution de l'élément de base (14) ou le chemin de roulement de bague intérieure étant formé sur la paroi d'enveloppe extérieure à symétrie de révolution de l'élément de base (14),
- la deuxième articulation pivotante (15.2) présente un deuxième palier entourant l'élément intermédiaire (18), en particulier un deuxième palier à roulement (19.2) avec une bague intérieure, un chemin de roulement de bague intérieure pour éléments roulants, une bague extérieure et un chemin de roulement de bague extérieure, la bague intérieure étant fixée sur la paroi d'enveloppe extérieure à symétrie de révolution de l'élément intermédiaire (18) ou le chemin de roulement de bague intérieure étant formé sur la paroi d'enveloppe extérieure à symétrie de révolution de l'élément intermédiaire (18), et
- la troisième articulation pivotante (15.3) présente un troisième palier entourant le porte-doigts (17), en particulier un troisième palier à roulement (19.3) avec une bague intérieure, un chemin de roulement de bague intérieure pour éléments roulants, une bague extérieure et un chemin de roulement de bague extérieure, la bague intérieure étant fixée sur la paroi d'enveloppe extérieure à symétrie de révolution du porte-doigts (17) ou le chemin de roulement de bague intérieure étant formé sur la paroi d'enveloppe extérieure du porte-doigts (17) à symétrie de révolution.

10. Préhenseur de robot selon l'une des revendications 1 à 9, **caractérisée en ce que** le moteur d'entraînement (M) est agencé à l'intérieur du corps de base de préhenseur (12), à l'intérieur de l'élément de base (14), à l'intérieur de l'élément intermédiaire (18) ou à l'intérieur du porte-doigts (17).

11. Préhenseur de robot selon l'une des revendications 1 à 10, **caractérisé en ce que** le moteur d'entraînement (M) est conçu pour un pilotage commandé par force et/ou par couple.

12. Préhenseur de robot selon l'une des revendications 1 à 11, **caractérisée en ce que** le premier doigt de préhenseur (16.1) présente, dans une section transversale perpendiculaire à son extension longitudinale, un contour en coupe transversale divergeant de la forme circulaire.
